# EUROPÄISCHE PATENTSCHRIFT

(11) **EP 1 380 738 B1**
(45) Veröffentlichungstag und Bekanntmachung des Hinweises auf die Patenterteilung: **19.03.2008**
(21) Anmeldenummer: 03405417.1
(22) Anmeldetag: 11.06.2003
(51) Int. Cl.: F02B 25/04, F02B 29/08, F02B 69/06, F02D 13/02

(54) **Verfahren zum Betreiben einer Hubkolbenbrennkraftmaschine**
Method for operating a piston internal combustion engine
Méthode de fonctionnement d'un moteur à combustion interne à pistons

(30) Priorität: 09.07.2002 EP 02405579
(43) Veröffentlichungstag der Anmeldung: 14.01.2004
(73) Patentinhaber: Wärtsilä Schweiz AG, 8401 Winterthur (CH)
(72) Erfinder: Zandt, Pieter, 8422 Pfungen (CH)
(74) Vertreter: Sulzer Management AG

(56) Entgegenhaltungen:
- EP-A- 0 397 521
- EP-A- 0 579 590
- US-A- 4 907 544
- PATENT ABSTRACTS OF JAPAN vol. 018, no. 212 (M-1593), 15. April 1994 (1994-04-15) & JP 06 010694 A (ISUZU MOTORS LTD), 18. Januar 1994 (1994-01-18)

## Beschreibung

Die Erfindung betrifft ein Verfahren zum Betreiben einer Hubkolbenbrennkraftmaschine, sowie eine nach dem Verfahren betriebene Hubkolbenbrennkraftmaschine gemäss dem Oberbegriff des unabhängigen Anspruchs der jeweiligen Kategorie.

Zur Leistungssteigerung von Hubkolbenbrennkraftmaschinen, wie zum Beispiel von Grossdieselmotoren für Schiffe oder stationäre Anlagen zur Erzeugung elektrischer Energie, wird nach einem Verbrennungstakt die Frischluft mittels einer Aufladegruppe, die in der Regel als Abgasturbolader ausgelegt ist, unter erhöhtem Druck in den Brennraum eines Zylinders eingebracht. Dabei kann ein Teil der thermischen Energie der Abgase ausgenutzt werden, die den Brennraum des Zylinders nach dem Verbrennungstakt verlassen. Dazu werden die heissen Abgase durch Öffnen eines Auslassventils aus dem Brennraum des Zylinders der Aufladegruppe zugeführt. Die Aufladegruppe besteht im wesentlichen aus einer Turbine, die durch die unter Druck in die Aufladegruppe eintretenden heissen Abgase angetrieben wird. Die Turbine treibt ihrerseits ein Laufrad an, wodurch Frischluft angesaugt und verdichtet wird. Der Turbine mit Laufrad als Verdichter, eine Anordnung, die häufig auch einfach als Turbolader bezeichnet wird, ist ein Diffusor, ein Ladeluftkühler mit Wasserabscheider und ein Einlassreceiver nachgeschaltet, von wo aus die komprimierte Frischluft, auch als Ladeluft oder Spülluft bezeichnet, schliesslich in die einzelnen Brennräume der Zylinder des Grossdieselmotors eingespeist wird. Durch den Einsatz einer solchen Aufladegruppe kann somit die Frischluftzufuhr erhöht und die Effizienz des Verbrennungsvorgangs im Brennraum des Zylinders gesteigert werden. Je nach Typ des Grossdieselmotors erfolgt die Einspeisung der Luft an unterschiedlichen Stellen am Zylinder. So wird beispielsweise bei längsgespülten Zweitakt-Motoren die Luft über Spülschlitze, die in der Lauffläche im unteren Bereich des Zylinders angeordnet sind, in den Brennraum des Zylinders eingebracht. Bei Viertakt-Motoren wird die Ladeluft in der Regel über ein oder mehrere Einlassventile, die im Zylinderdeckel angeordnet sind, in den Brennraum des Zylinders eingebracht. Dabei sind durchaus auch Zweitakt-Motoren bekannt, die an Stelle von Spülschlitzen im unteren Bereich des Zylinders mit Einlassventilen im Zylinderdeckel ausgerüstet sind.

Da die Turbine der Aufladegruppe allein durch die aus dem Brennraum des Zylinders entweichenden heissen Abgase angetrieben wird, arbeiten die bekannten Aufladegruppen für Grossdieselmotoren insbesondere kurz nach dem Start bzw. unterhalb einer bestimmten Grenzdrehzahl der Maschine nur wenig effektiv. Das heisst, dass zum Beispiel die in einem vorangegangenen Verbrennungsvorgang entstandenen Abgase nur in ungenügendem Masse aus dem Brennraum des Zylinders gespült werden, was unter anderem zur Konsequenz hat, dass der Brennraum des Zylinders während des Spültakts nicht ausreichend mit Frischluft versorgt wird und damit für den folgenden Verbrennungstakt Frischluft nicht in ausreichender Menge zur Verfügung steht. Daher wird die Aufladegruppe im allgemeinen durch einen oder mehrere zusätzliche mechanische oder elektrische Hilfslader ergänzt, um unterhalb der Grenzdrehzahl eine entsprechende Drehmomentsteigerung zu erreichen, so dass die Hubkolbenbrennkraftmaschine effizienter betrieben werden kann. Der Hilfslader saugt üblicherweise die Luft aus einem ersten Raum, der dem Ladeluftkühler nachgeordnet ist, an und fördert diese in einen zweiten Raum, aus dem die Luft dann über die Spülschlitze in den Brennraum des Zylinders einströmen kann. Ein Zurückströmen der Luft in den ersten Raum wird dabei meist durch als Klappen ausgebildete Rückströmsicherungen verhindert. Solche Hilfslader sind häufig als elektrische Gebläse mit jeweils bis zu 200 kW elektrischer Leistung ausgelegt und unterstützen bzw. ersetzen den Abgasturbolader unterhalb der Grenzdrehzahl, die typischerweise bei ca. 10 % bis 50 %, speziell bei 30 % bis 35 % der Vollastleistung des Grossdieselmotors erreicht wird. Ist die Grenzdrehzahl überschritten, kann in der Regel auf den Hilfslader verzichtet werden, d.h. der Hilfslader wird abgeschaltet und die Maschine wird allein durch den Abgasturbolader aufgeladen. In diesem Betriebszustand, d.h. nach dem Abschalten der Hilfslader, sind die oben genannten Klappen geöffnet und ermöglichen damit ein direktes Überströmen der Ladeluft aus dem ersten Raum, der dem Ladeluftkühler nachgeordnet ist, in den zweiten Raum, aus dem die Luft den Spülschlitzen zugeführt wird.

In einem in EP-A-0 397 521 offenbarten Verfahren wird eine Brennkraftmaschine unterhalb einer-vorbestimmten Drehzahl in einem Zweitaktverfahren und oberhalb dieser Drehzahl in einem Viertaktverfahren betrieben. Die in EP-A-0 397 521 offenbarte Brennkraftmaschine umfasst einen Turbolader der zusätzlich mit einem Elektromotor kombiniert ist, um den Turbolader im Zweitakbetrieb bei tiefen Drehzahlen zu unterstützen

Dokument US 4 907 544 offenbart eine Zweitakt-Brennkraftmaschine, die im Leerlauf im Viertaktbetrieb betrieben werden kann. Der Viertaktbetrieb wird in der in Dokument US 4 907 544 offenbarten Brennkraftmaschine durch ein selbsttätiges Hilfsventil ermöglicht, durch welches in den Expansionsphasen Spühlluft und/oder ein Luft/Brennstoffgemisch angesaugt wird. Dank dem Hilfsventil kann im Leerlauf auf einen externen Hilfslader verzichtet werden.

Wenn auch durch den Einsatz von Hilfsladem zur Unterstützung des Abgasturboladers im Niederlastbetrieb eine Verbesserung der Zylinderspülung erreichbar ist, wird der Brennraum des Zylinder bei den bekannten Zweitakt-Verfahren im Niederlastbereich unterhalb einer gewissen Grenzdrehzahl dennoch entweder nur unzureichend gespült, so dass im anschliessenden Verbrennungstakt Frischluft nicht in ausreichender Menge zur Verfügung steht, oder aber es wird bei kleinen Drehzahlen dem Brennraum eine zu grosse Menge an Frischluft zugeführt. Das heisst, die Menge an zugeführter Luft kann bei den bekannten Verfahren zum Betreiben einer Hubkolbenbrennkraftmaschine nicht gesteuert oder geregelt werden.

Darüber hinaus bringt der Einsatz zusätzlicher Hilfslader zur Unterstützung des Abgasturboladers im Niederlastbetrieb auch erhebliche Nachteile mit sich. Neben den Anschaffungskosten für die Hilfslader müssen zu deren Steuerung und / oder Regelung zusätzliche Einrichtungen installiert werden. Durch die zuvor erwähnten Klappen, die als Rückströmsicherungen während des Betriebs des Hilfsladers unerlässlich sind, ist die Gestaltung des Einlassreceivers relativ aufwendig. Zusätzliche Aggregate erfordern selbstverständlich einen zusätzlichen Wartungs- und Reparaturaufwand mit den damit verbundenen Mehrkosten für Betriebsmittel, Ersatzteile und Personal. Darüber hinaus beanspruchen die Hilfslader sowie die Unterteilung des Einlassreceivers in einen durch die Klappen getrennten ersten und zweiten Raum relativ viel Platz, der meist knapp bemessen ist und bedingen zusätzliches Gewicht. Ausserdem ist der Betrieb mit Hilfsladem auch aus energetischer Sicht ungünstig, da beispielsweise die für den Betrieb elektrischer Hilfslader notwendige elektrische Energie bereit gestellt werden muss. Das heisst, letztlich resultiert der Betrieb der Hilfslader, auch wegen des zusätzlichen Gewichts, in einem erhöhten Treibstoffverbrauch.

Die Aufgabe der Erfindung ist es daher, ein Verfahren zum Betreiben einer Hubkolbenbrennkraftmaschine, insbesondere eines Grossdieselmotors vorzuschlagen, welches insbesondere in einem Lastbereich unterhalb einer vorgebbaren Grenzdrehzahl einen effizienteren Betrieb der Hubkolbenbrennkraftmaschine ermöglicht, ohne dass dafür zusätzliche mechanische, elektrische oder andere Hilfslader vonnöten sind. Ferner ist es eine Aufgabe der Erfindung, eine nach dem Verfahren betreibbare Hubkolbenbrennkraftmaschine vorzuschlagen.

Die diese Aufgaben in verfahrenstechnischer und apparativer Hinsicht lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Erfindungsgemäss wird somit ein Verfahren zum Betreiben einer längsgespülten Hubkolbenbrennkraftmaschine, insbesondere eines Grossdieselmotors, vorgeschlagen. Die längsgespülte Hubkolbenbrennkraftmaschine umfasst einen Zylinder mit einem Auslassventil und einer in Form von Spülschlitzen ausgeführten Spülluftöffnung, in welchem Zylinder ein Kolben entlang einer Lauffläche zwischen einer unteren Totpunktposition und einer oberen Totpunktposition hin- und herbewegbar angeordnet ist, sowie eine Aufladegruppe mit einer von Abgasen aus dem Brennraum des Zylinders angetriebenen Turbine zum Verdichten von Luft, wobei die verdichtete Luft als Spülluft dem Brennraum des Zylinder3 durch die Spülschlitze zugeführt wird. Dabei wird mindestens ein Zylinder der längsgespülten Hubkolbenbrennkraftmaschine zumindest in einem vorgebbaren ersten Drehzahlbereich nach einem Viertaktverfahren betrieben.

Bevorzugt kommt das erfindungsgemässe Verfahren beim Betrieb eines Grossdieselmotors, insbesondere Kreuzkopf-Grossdieselmotor, bei welchem die Betätigung des Auslassventils und der Zeitpunkt der Kraftstoffeinspritzung koordiniert steuer- und / oder regelbar ist, in einem Tieflastbereich, welcher Tieflastbereich unterhalb einer vorgebbaren ersten Grenzdrehzahl der Hubkolbenbrennkraftmaschine angesiedelt ist, beispielsweise nach einem Start des Grossdieselmotors, zum Einsatz. Der Tieflastbereich kann beispielsweise einen Lastbereich bis ca. 10 % einer maximal erreichbaren Vollastleistung der Hubkolbenbrennkraftmaschine umfassen, muss jedoch nicht auf einen Lastbereich bis 10 % einer maximal erreichbaren Vollastleistung beschränkt sein. Zumindest unterhalb der ersten Grenzdrehzahl erbringt ein Turbolader, der von den aus den Brennräumen der Zylinder des Motors austretenden heissen Abgasen gespeist wird, noch nicht die erforderliche Leistung und wird daher herkömmlicherweise durch ein zusätzliches, in der Regel elektrisch betriebenes Gebläse, das als Hilfslader ausgebildet ist, unterstützt. Durch die Verwendung des Hilfsladers zur Unterstützung des Abgasturboladers in einem Niederlastbetrieb unterhalb einer Grenzdrehzahl ist zwar eine Verbesserung der Zylinderspülung erreichbar, jedoch wird der Brennraum des Zylinder bei den bekannten Zweitaktverfahren im Niederlastbetrieb entweder nur unzureichend gespült, so dass im anschliessenden Verbrennungstakt Frischluft nicht in ausreichender Menge zur Verfügung steht, oder aber es wird bei kleinen Drehzahlen dem Brennraum eine zu grosse Menge an Frischluft zugeführt. Das heisst, die Menge an zugeführter Luft kann bei den bekannten Verfahren zum Betreiben einer Hubkolbenbrennkraftmaschine nicht gesteuert und / oder geregelt werden. Durch die Anwendung des erfindungsgemässen Verfahrens kann einerseits auf zusätzlichen Gebläse, die als Hilfslader ausgebildet sind, verzichtet werden und andererseits die Zufuhr von Frischluft in den Brennraum des Zylinders gesteuert und / oder geregelt werden, so dass die Hubkolbenbrennkraftmaschine deutlich effizienter betrieben werden kann.

In einer bevorzugten Ausführungsvariante des erfindungsgemässen Verfahrens, die im folgenden beschrieben wird, wird die Hubkolbenbrennkraftmaschine im Tieflastbereich unterhalb einer vorgebbaren ersten Grenzdrehzahl nach einem Viertaktverfahren betrieben. Die Spülluft wird durch Spülluftöffnungen, die als Spülschlitze in der Zylinderwand ausgebildet sind, dem Brennraum des Zylinders zugeführt, das heisst die Hubkolbenbrennkraftmaschine ist beispielsweise als Grossdieselmotor mit Längsspülung ausgelegt.

Bei einer Variante des erfindungsgemässen Verfahrens umfasst zumindest unterhalb der ersten Grenzdrehzahl ein Verbrennungstakt eine Vorspülphase, so dass nach erfolgter Kraftstoffeinspritzung mit nachfolgender Verbrennung und vor einem daran anschliessenden Eintritt der Spülluft in den Brennraum des Zylinders, das Auslassventil in der Vorspülphase, wie nachfolgend geschildert, zuerst geöffnet und dann geschlossen wird.

Nach einem Kompressionstakt mit anschliessender Verbrennung stehen in einem Brennraum eines Zylinders der Hubkolbenbrennkraftmaschine heisse Verbrennungsgase unter einem Arbeitsdruck an, wodurch ein Kolben in einem Expansionstakt in bekannter Weise in Richtung einer unteren Totpunktposition, entsprechend einem Kurbelwinkel von 180°, bewegt wird. Wie üblich wird im Rahmen dieser Anmeldung bei einem Zweitaktverfahren die untere Totpunktposition des Kolbens, bei welcher der von Zylinder, Zylinderdeckel und Kolben begrenzte Brennraum ein maximales Volumen aufweist, mit einem Kurbelwinkel von 180° identifiziert, während eine obere Totpunktposition, bei welcher der Brennraum ein minimales Volumen aufweist, mit einem Kurbelwinkel von 0° bzw. 360° identifiziert wird. Bei einem Viertaktverfahren wird, wie in bekannter Weise üblich, die untere Totpunktposition einem Kurbelwinkel von 180° bzw. 540° und die obere Totpunktposition einem Kurbelwinkel von 0°, 360° oder 720° zugeordnet. Das Auslassventil ist unmittelbar nach dem Verbrennungsvorgang zunächst noch geschlossen. In der sich an die Verbrennung anschliessende Vorspülphase wird, bevor der Kolben nach der Verbrennung die Spülschlitze erstmals freigibt, bei einem ersten vorgebbaren Kurbelwinkel das Auslassventil geöffnet, welcher erste vorgebbare Kurbelwinkel den Beginn der Vorspülpase definiert. Dabei wird der erste Kurbelwinkel, d.h. der Beginn der Vorspülphase so gewählt, dass beim Öffnen des Auslassventils zwischen Brennraum und einem Abgasstutzen, der dazu geeignet ist, der Aufladegruppe die Verbrennungsgase aus dem Brennraum des Zylinders zuzuführen, eine Druckdifferenz besteht, so dass aufgrund der Druckdifferenz die heissen Abgase durch den Abgasstutzen in den Turbolader gelangen und dort die Turbine und damit das Laufrad antreiben, wodurch komprimierte Luft als Spülluft zum Einbringen in einen Brennraum eines Zylinders, dessen Spülschlitze zu diesem Zeitpunkt vom entsprechenden Kolben freigegeben sind, zur Verfügung gestellt wird. Das heisst, durch das Öffnen des Auslassventils wird ein Teil der thermischen Energie der Abgase in an sich bekannter Weise bereits vor Freigabe der Spülschlitze, also vor dem Einströmen der Spülluft in den Brennraum des Zylinders zum Antrieb der Turbine des Turboladers genutzt.

Wenn die Druckdifferenz zwischen Brennraum und Abgasstutzen im wesentlichen ausgeglichen ist, wird das Auslassventil noch während der Vorspülphase bei einem zweiten Kurbelwinkel wieder geschlossen. Durch die weitere Bewegung des Kolbens im Zylinder in Richtung zur unteren Totpunktposition wird das eingeschlossene Volumen im Brennraum vergrössert. Da das Auslassventil geschlossen ist, fällt der Druck im Brennraum unter den Wert eines Drucks in einem Einlassreceiver ab, über welchen Einlassreceiver die Spülluft in den Brennraum des Zylinders gelangt, wenn die Spülschlitze vom Kolben freigegeben sind. Bei einem dritten Kurbelwinkel gibt der Kolben schliesslich die Spülschlitze zumindest teilweise frei, so dass Spülluft aus dem Einlassreceiver in den Brennraum einströmen kann, wobei das Auslassventil geschlossen bleibt. Durch den während der Vorspülphase im Brennraum bezüglich des Einlassreceivers erzeugten Unterdruck wird die Spülluft in den Brennraum angesaugt. Das heisst, der Turbolader, der die Spülluft über den Einlassreceiver in den Brennraum des Zylinders unter einem vorgebbaren Druck einbringt, wird durch den im Brennraum während der Expansionsbewegung des Kolbens in der Vorspülphase erzeugten Unterdruck in seiner Funktion unterstützt. Da die maximale Druckdifferenz zwischen Brennraum und Einlassreceiver von dem Kurbelwinkel abhängt, bei dem in der Vorspülphase das Auslassventil wieder geschlossen wird, kann die Menge an Frischluft, die während der Vorspülphase nach der Freigabe der Spülschlitze in den Brennraum eingebracht wird, durch die Vorgabe des Kurbelwinkels, bei welchem das Auslassventil in der Vorspülphase geschlossen wird, gesteuert und / oder geregelt werden.

Selbstverständlich ist es möglich, dass zur Einstellung einer bestimmten Menge an Frischluft, die insgesamt bis zu einem nächsten Verbrennungsvorgang im Brennraum des Zylinders zur Verfügung gestellt werden soll, das Auslassventil zu Beginn der Vorspülphase zwar geöffnet, jedoch vor Freigabe der Spülschlitze nicht mehr geschlossen wird.

In der Nähe der unteren Totpunktposition, entsprechend einem Kurbelwinkel von 180°, wird, je nach dem ob eine Vorspülphase stattgefunden hat oder nicht, oder das Auslassventil in der Vorspülphase wieder geschlossen wurde oder nicht, das Auslassventil wieder geöffnet oder bleibt geöffnet, so dass in einem folgenden Kompressionshub, der einen Kurbelwinkelbereich zwischen 180° und 360° umfasst und in welchem eine Hauptspülphase startet, ein Teil der Abgase durch das Auslassventil über den Abgasstutzen der Aufladegruppe zugeführt wird. Das Auslassventil bleibt zum Ausstossen eines Teils der Abgase bevorzugt zumindest solange geöffnet, bis der Kolben die Spülschlitze im Verlauf des Kompressionshubs wieder verschliesst und wird danach bei einem vorgebbaren vierten Kurbelwinkel beim Beginn der Hauptspülphase geschlossen. Bevorzugt wird die Betätigung des Auslassventils durch eine frei programmierbare Ansteuereinheit in Abhängigkeit von der Drehzahl der Hubkolbenbrennkraftmaschine und / oder dem Kurbelwinkel und/oder einem Gasdruck im Brennraum des Zylinders und / oder der Temperatur im Brennraum des Zylinders und / oder der Drehzahl der Aufladegruppe und / oder dem Gasdruck in der Aufladegruppe und / oder der Temperatur in der Aufladegruppe und / oder in Abhängigkeit anderer Betriebsparameter der Hubkolbenbrennkraftmaschine gesteuert und /oder geregelt.

Dabei beträgt in einer bevorzugten Variante des erfindungsgemässen Verfahrens der Kurbelwinkel, bei welchem die Hauptspülphase beginnt, ungefähr 270°. Es ist selbstverständlich auch möglich, dass das Auslassventil bei einem anderen Wert des Kurbelwinkels geschlossen wird, die Hauptspülphase also bei einem anderen Wert des Kurbelwinkels beginnt. So kann die Hauptspülphase insbesondere auch erst bei einem Kurbelwinkel von mehr als 360° einsetzen.

Selbstverständlich ist es auch möglich, dass zur Einstellung einer bestimmten Menge an Frischluft, die insgesamt bis zu einem nächsten Verbrennungsvorgang im Brennraum des Zylinders zur Verfügung gestellt werden soll, das Auslassventil bis zur erneuten Freigabe der Spülschlitze durch den Kolben nicht mehr geschlossen wird, das heisst die Hauptspülphase kann auch fehlen.

Dabei erfolgt zumindest in einem Kurbelwinkelbereich zwischen 180° und 540°, also insbesondere innerhalb der Hauptspülphase, keine Brennstoffeinspritzung. Durch die weitere Kompressionsbewegung des Kolbens in Richtung der oberen Totpunktposition, wird, falls die Hauptspülphase stattfindet, das im Brennraum eingeschlossene Gemisch aus Spülluft und noch nicht ausgestossenen Abgasen solange komprimiert, bis der Kolben die obere Totpunktposition, entsprechend einem Kurbelwinkel von 360° erreicht hat. Durch die anschliessende Expansionsbewegung des Kolbens in Richtung einer unteren Totpunktposition bei einem Kurbelwinkel von 540°, fällt der Druck im Brennraum des Zylinders bei weiterhin geschlossenem Auslassventil wieder ab. Da der Weg des Kolbens bei geschlossenem Auslassventil nach dem Verschliessen der Spülschlitze im Kompressionshub zwischen 180° und 360° kleiner ist, als der Weg des Kolbens beim anschliessenden Expansionshub zwischen der oberen Totpunktposition bei einem Kurbelwinkel von 360° und der erneuten Freigabe der Spülschlitze, entsteht im Brennraum des Zylinders bezüglich des Einlassreceivers ein Unterdruck. Dabei hängt die maximale Grösse der Druckdifferenz zwischen Einlassreceiver und Brennraum davon ab, bei welchem Wert des Kurbelwinkels die Hauptspülphase beginnt. Analog zur Vorspülphase gibt der Kolben schliesslich die Spülschlitze zumindest teilweise wieder frei, so dass Spülluft aus dem Einlassreceiver in den Brennraum einströmen kann, wobei das Auslassventil geschlossen bleibt. Durch den während der Hauptspülphase im Brennraum bezüglich des Einlassreceivers erzeugten Unterdruck wird die Spülluft in den Brennraum angesaugt. Das heisst, der Turbolader, der die Spülluft über den Einlassreceiver in den Brennraum des Zylinders unter einem vorgebbaren Druck einbringt, wird durch den im Brennraum während der Expansionsbewegung des Kolbens in der Hauptspülphase erzeugten Unterdruck in seiner Funktion unterstützt. Da die maximale Druckdifferenz zwischen Brennraum und Einlassreceiver vom Startpunkt der Hauptspülphase abhängt, kann die Menge an Frischluft, die während der Hauptspülphase nach Freigabe der Spülschlitze in den Brennraum eingebracht wird, durch die Vorgabe des Starts der Hauptspülphase gesteuert und /oder geregelt werden.

Findet dagegen zur Einstellung der in den Brennraum des Zylinders einzubringenden Menge an Spülluft keine Hauptspülphase statt, das heisst, das Auslassventil wird mindestens in einem Kurbelwinkelbereich zwischen 180° und der Freigabe der Spülschlitze bei einem Kurbelwinkel von mehr als 360° nicht geschlossen, wird natürlich während der entsprechenden Expansionsbewegung des Kolbens zwischen einem Kurbelwinkel von 360° bis zur Freigabe der Spülschlitze im Brennraum des Zylinders der Hubkolbenbrennkraftmaschine im wesentlichen kein Unterdruck erzeugt.

In der Nähe der unteren Totpunktposition bei einem Kurbelwinkel von 540° wird das Auslassventil, sofern es geschlossen ist, wieder geöffnet, so dass im folgenden Kompressionshub die verbliebenen Abgase durch das Auslassventil über den Abgasstutzen der Aufladegruppe zugeführt werden und es beginnt in bekannter Weise ein Kompressionstakt, mit Kraftstoffeinspritzung und anschliessender Verbrennung.

Zumindest im Tieflastbereich unterhalb einer vorgebbaren ersten Grenzdrehzahl wird somit die längsgespülte Hubkolbenbrennkraftmaschine nach einem Viertaktverfahren betrieben, welches Viertaktverfahren es gestattet, die Menge an zugeführter Frischluft zu steuern und / oder zu regeln. Dazu kann zumindest unterhalb der ersten Grenzdrehzahl nach erfolgter Kraftstoffeinspritzung mit nachfolgender Verbrennung und vor einem daran anschliessenden Eintritt der Spülluft in den Brennraum des Zylinders, das Auslassventil mindestens eines Zylinders in der Vorspülphase zuerst geöffnet und dann geschlossen und zumindest unterhalb der ersten Grenzdrehzahl kann in der Hauptspülphase das Auslassventil mindestens eines Zylinders zuerst geöffnet und dann geschlossen werden.

Oberhalb der ersten Grenzdrehzahl und unterhalb einer vorgebbaren zweiten Grenzdrehzahl arbeitet die längsgespülte Hubkolbenbrennkraftmaschine in einem Niederlastbereich. Der Niederlastbereich kann beispielsweise einen Lastbereich zwischen 10 % und 35 % einer maximal erreichbaren Vollastleistung der Hubkolbenbrennkraftmaschine umfassen. Der Niederlastbereich muss jedoch nicht auf einen Lastbereich zwischen 10 % und 35 % einer maximal erreichbaren Vollastleistung beschränkt sein.

Bevorzugt wird die Hubkolbenbrennkraftmaschine im Niederlastbereich nach einem Zweitaktverfahren betrieben. Dabei umfasst das im Niederlastbereich angewendete Zweitaktverfahren in einer bevorzugten Ausführungsvariante des erfindungsgemässen Verfahrens eine Verbrennungsphase mit Vorspülphase, welche Vorspülphase oben im Rahmen der Beschreibung des Viertaktverfahrens bereits eingehend beschrieben wurde. Selbstverständlich kann die Hubkolbenbrennkraftmaschine im Niederlastbereich nach einem Zweitaktverfahren betrieben werden, bei welchem zur Einstellung einer bestimmten Menge an Frischluft, die insgesamt bis zu einem nächsten Verbrennungsvorgang im Brennraum des Zylinders zur Verfügung gestellt werden soll, das Auslassventil zu Beginn der Vorspülphase zwar geöffnet, jedoch vor Freigabe der Spülschlitze nicht mehr geschlossen wird.

Oberhalb der vorgebbaren zweiten Grenzdrehzahl arbeitet die längsgespülte Hubkolbenbrennkraftmaschine schliesslich in einem Hochlastbereich. Der Hochlastbereich kann beispielsweise einen Lastbereich über 35 % einer maximal erreichbaren Vollastleistung der Hubkolbenbrennkraftmaschine umfassen. Der Hochlastbereich muss jedoch nicht auf einen Lastbereich oberhalb 35 % einer maximal erreichbaren Vollastleistung beschränkt sein.

Bevorzugt wird die Hubkolbenbrennkraftmaschine im Hochlastbereich nach einem Zweitaktverfahren betrieben. Dabei umfasst das im Hochlastbereich angewendete Zweitaktverfahren in einer besonders bevorzugten Ausführungsvariante des erfindungsgemässen Verfahrens eine Verbrennungsphase, wobei zur Einstellung einer bestimmten Menge an Frischluft, die insgesamt bis zu einem nächsten Verbrennungsvorgang im Brennraum des Zylinders zur Verfügung gestellt werden soll, das Auslassventil zu Beginn der Vorspülphase zwar geöffnet, jedoch vor Freigabe der Spülschlitze nicht mehr geschlossen wird. In einer anderen Variante kommt im Hochlastbereich ein Zweitaktverfahren ohne Vorspülphase zur Anwendung.

Selbstverständlich kann je nach Anforderung die Hubkolbenbrennkraftmaschine im Tieflastbereich und im Niederlastbereich jeweils nach einem der beschriebenen Viertaktverfahren betrieben werden und im Hochlastbereich nach einem der beschriebenen Zweitaktverfahren betrieben werden.

Es ist unter Umständen sogar möglich die Hubkolbenbrennkraftmaschinen in allen Drehzahlbereichen nach einem der beschriebenen Viertaktverfahren zu betreiben. Beispielsweise wenn die maximal erreichbare Leistung der Hubkolbenbrennkraftmaschine nicht erforderlich ist, kann dadurch zum Beispiel Treibstoff eingespart werden.

Selbstverständlich kann zur Realisierung spezieller Betriebszustände die Hubkolbenbrennkraftmaschine in jedem der drei erwähnten Drehzahlbereiche, also unterhalb der ersten Grenzdrehzahl, zwischen der ersten Grenzdrehzahl und der zweiten Grenzdrehzahl und auch oberhalb der zweiten Grenzdrehzahl nach einem der beschriebenen Zweitaktverfahren oder nach einem der beschriebenen Viertaktverfahren betrieben werden, wobei jedoch mindestens in einem der drei Lastbereiche erfindungsgemäss ein Viertaktverfahren zur Anwendung kommt.

Zuletzt sei noch darauf hingewiesen, dass bei allen zuvor beschriebenen Ausführungsbeispielen bzw. Varianten des erfindungsgemässen Verfahrens entweder alle Zylinder der Hubkolbenbrennkraftmaschine nach einer der beschriebenen Ausführungsformen bzw. Varianten betrieben werden kann oder nur ein Teil der Zylinder der Hubkolbenbrennkraftmaschine.
Insbesondere ist es möglich, dass unterschiedliche Zylinder ein und derselben Hubkolbenbrennkraftmaschine nach unterschiedlichen Varianten des erfindungsgemässen Verfahren gleichzeitig betrieben werden, beispielsweise wenn die maximal erreichbare Leistung der Hubkolbenbrennkraftmaschine nicht zur Verfügung stehen muss und / oder wenn beispielsweise Brennstoff eingespart werden soll.

Die erfindungsgemässe längsgespülte Hubkolbenbrennkraftmaschine, insbesondere Grossdieselmotor, die nach dem erfindungsgemässen Verfahren betrieben wird, umfasst einen Zylinder mit einem Auslassventil und einer in Form von Spülschlitzen ausgeführten Spülluftöffnung, in welchem Zylinder ein Kolben entlang einer Lauffläche zwischen einer unteren Totpunktposition und einer oberen Totpunktposition hin- und herbewegbar angeordnet ist, sowie eine Aufladegruppe mit einer von Abgasen aus dem Brennraum des Zylinders angetriebenen Turbine zum Verdichten von Luft, wobei die verdichtete Luft als Spülluft dem Brennraum des Zylinders durch die Spülschlitze zugeführt wird.

Im folgenden wird die Erfindung an Hand der Zeichnung näher erläutert. Es zeigen:
- Fig. 1: schematisch die wesentlichen Teile eines Grossdieselmotors mit Aufladegruppe;
- Fig. 2a: in schematischer Darstellung ein Viertaktverfahren mit Vorspülphase und Hauptspülphase;
- Fig. 2b: wie Fig. 2a, wobei das Auslassventil in der Vorspülphase nicht geschlossen wird;
- Fig. 3a: in schematischer Darstellung ein anderes Viertaktverfahren mit Vorspülphase und Hauptspülphase;
- Fig. 3b: wie Fig. 3a, wobei das Auslassventil in der Vorspülphase nicht geschlossen wird;
- Fig. 4: in schematischer Darstellung ein Zweitaktverfahren mit Vorspülphase.

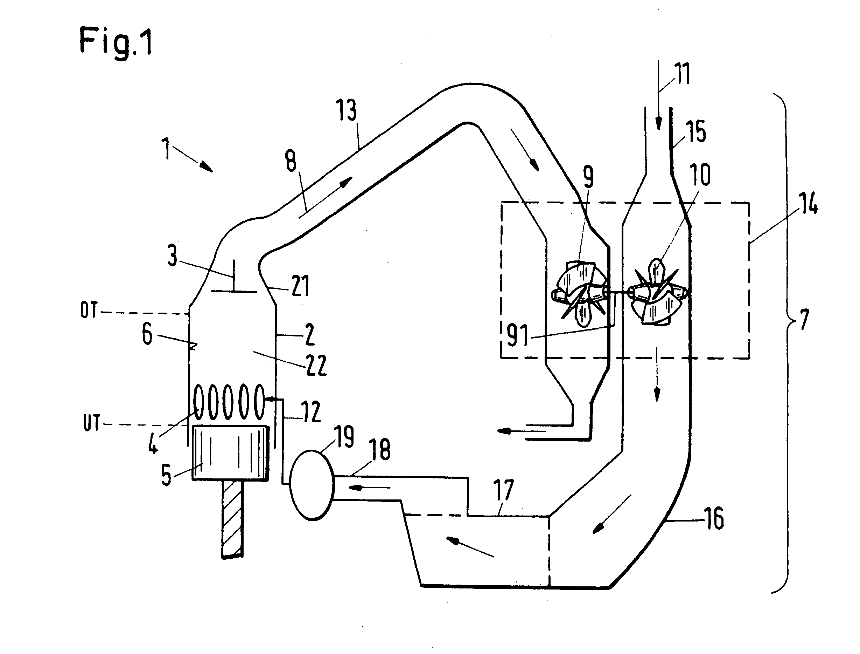

Fig. 1 zeigt in einer schematischen Darstellung die wesentlichen Teile eines Grossdieselmotors mit Aufladegruppe 7, der als Grossdieselmotor mit Längsspülung ausgebildet ist und im folgenden gesamthaft mit dem Bezugszeichen 1 bezeichnet wird.

Der Grossdieselmotor 1 umfasst üblicherweise mehrere Zylinder 2 mit Zylinderdeckel 21 und einem darin angeordneten Auslassventil 3, in welchem Zylinder 2 ein Kolben 5 zwischen einer unteren Totpunktposition UT und einer oberen Totpunktposition OT entlang einer Lauffläche 6 hin- und herbewegbar angeordnet ist. Dabei wird die obere Totpunktposition OT des Kolbens 5 wie üblich mit einem Kurbelwinkel K_{W} von 0°, 360° bzw. 720°, je nachdem, ob der Motor nach einem Zwei- oder einem Viertaktverfahren betrieben wird, und die untere Totpunktposition UT des Kolbens 5 mit einem Kurbelwinkel K_{W} von 180° bzw. 540° identifiziert. Der Zylinder 2 mit Zylinderdeckel 21 und der Kolben 5 begrenzen in bekannter Weise einen Brennraum 22. Im unteren Bereich des Zylinders 2 sind mehrere Spülluftöffnungen vorgesehen, die als Spülschlitze 4 ausgeführt sind. Je nach Stellung des Kolbens 5 werden die Spülschlitze 4 von diesem überdeckt oder freigegeben. Durch die Spülschlitze 4 kann die als Spülluft 12 bezeichnete Frischluft in den Brennraum 22 des Zylinders 2 einströmen. Durch das im Zylinderdeckel 21 angeordnete Auslassventil 3 strömen die bei der Verbrennung entstandenen Abgase 8 durch einen Abgasstutzen 13, der sich an das Auslassventil 3 anschliesst, in eine Aufladegruppe 7. Die Aufladegruppe 7 umfasst als wesentliche Komponenten in an sich bekannter Weise ein Laufrad 10 zum Verdichten von Luft 11, sowie eine Turbine 9 zum Antreiben des Laufrades 10, das durch eine Achse 91 wirkfest mit der Turbine 9 verbunden ist. Die Turbine 9 und das Laufrad 10 sind in einem Gehäuse angeordnet und bilden einen Turbolader 14. Die Turbine 9 wird durch die einströmenden heissen Abgase 8 aus dem Brennraum 22 des Zylinders 2 angetrieben. Zum Beschicken des Brennraums 22 des Zylinders 2 mit Spülluft 12 wird durch das Laufrad 10 über einen Ansaugstutzen 15 Luft 11 angesaugt und im Turbolader 14 komprimiert. Aus dem Turbolader 14 gelangt die komprimierte Luft durch einen nachgeschalteten Diffusor 16 und einen Ladeluftkühler 17 über eine Druckleitung 18 in einen Einlassreceiver 19, von dem aus die komprimierte Luft schliesslich als Spülluft 12 durch die Spülschlitze 4 unter erhöhtem Druck in den Brennraum 22 des Zylinders 2 gelangt.

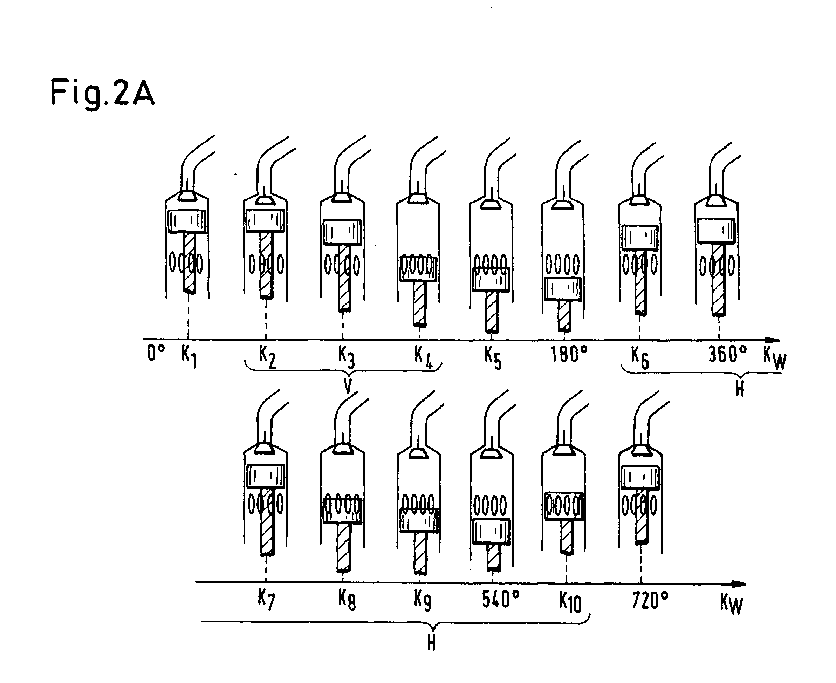

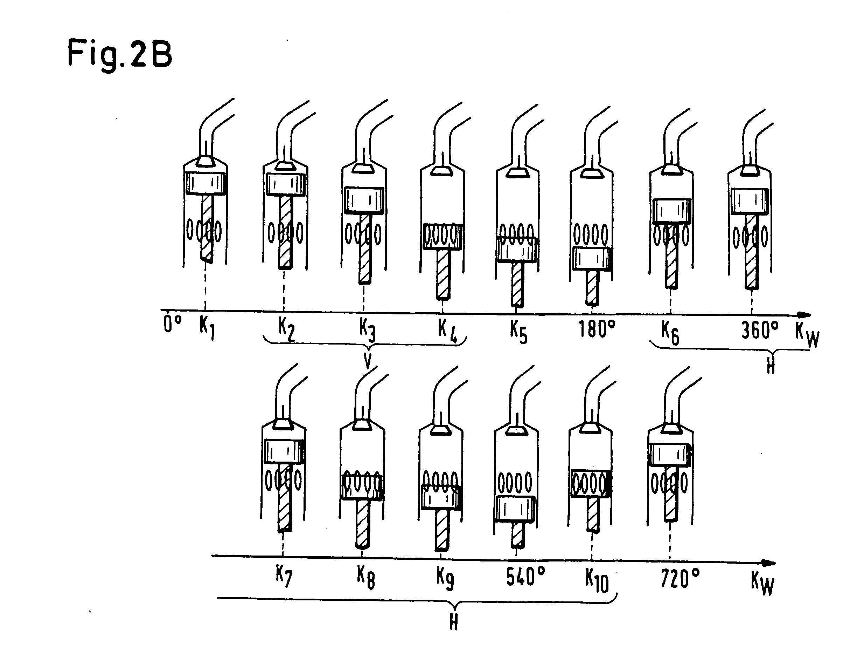

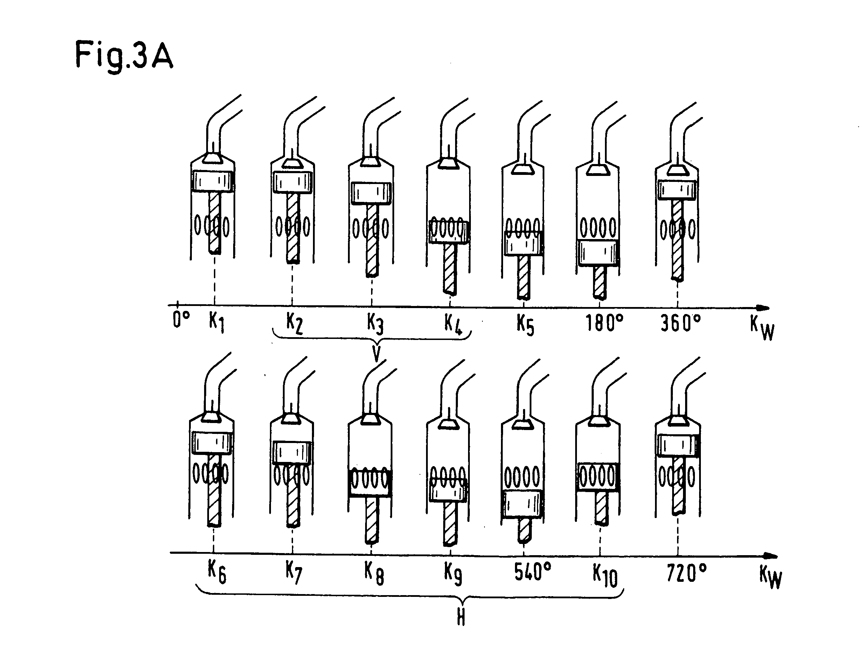

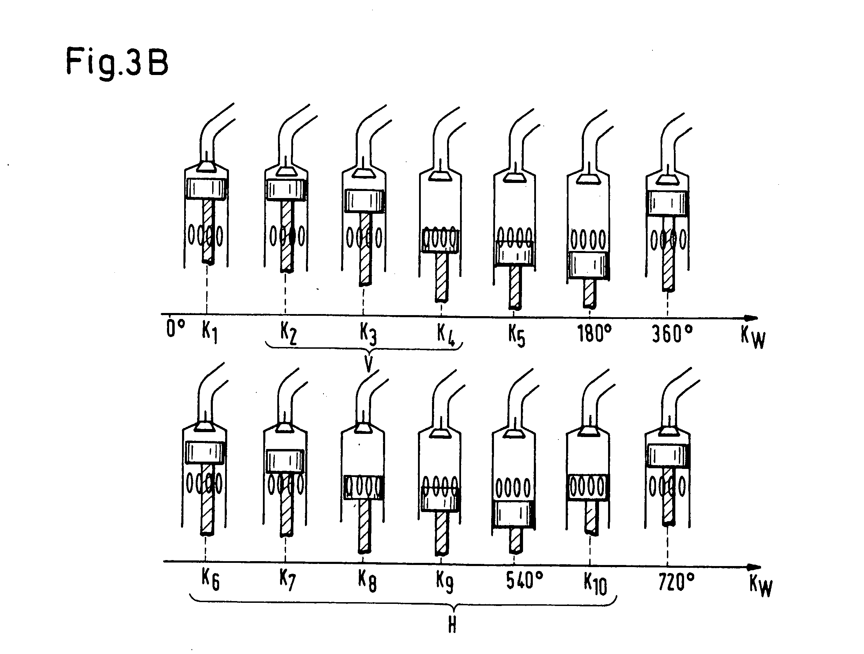

Die Fig. 2a, 2b, 3a und 3b zeigen in schematischer Darstellung je ein Ausführungsbeispiel eines Viertaktverfahrens für einen bestimmten Drehzahlbereich der Hubkolbenbrennkraftmaschine gemäss einem erfindungsgemässen Verfahren. Dabei können die in den Fig. 2a, 2b, 3a und 3b dargestellten Verfahren je nach Anforderung unterhalb einer ersten Grenzdrehzahl, und / oder zwischen der ersten Grenzdrehzahl und einer zweiten Grenzdrehzahl und / oder oberhalb der zweiten Grenzdrehzahl zur Anwendung kommen. Dabei unterscheiden sich die in den Fig . 3a und 3b dargestellten Ausführungsvarianten von den in den Fig. 2a und 2b dargestellten Varianten dadurch, dass das Auslassventil 3 bei einem Wert des Kurbelwinkels K₆, der grösser oder gleich 360° ist zum Beginn der Hauptspülphase H geschlossen wird, während der Kurbelwinkel gemäss Fig. 2a und 2b einen Wert hat, der kleiner als 360° ist. Somit kann, wie später noch näher erläutert wird, die Hauptspülphase H gemäss den Fig. 3a und 3b insbesondere auch bei einem Kurbelwinkel K₆ von mehr als 360° einsetzen.

Da die in Fig. 2a und Fig. 3a dargestellten Varianten des Viertaktverfahrens sich im wesentlichen nur dadurch unterscheiden, dass die Hauptspülphase in Fig. 2a bei einem Kurbelwinkel von weniger als 360 und in Fig. 3a bei einem Kurbelwinkel, der grösser oder gleich 360° ist, einsetzt, werden diese beiden Varianten im folgenden gemeinsam diskutiert. An den Punkten, an denen sie sich unterscheiden, wird in der Beschreibung darauf hingewiesen.

In den in Fig. 2a und Fig. 3a gezeigten Varianten eines Viertaktverfahrens gemäss dem erfindungsgemässen Verfahren wird zumindest nach erfolgter Kraftstoffeinspritzung mit nachfolgender Verbrennung und vor einem daran anschliessenden Eintritt der Spülluft 12 in den Brennraum 22 des Zylinders 2 das Auslassventil 3 in der Vorspülphase V, wie nachfolgend geschildert, zuerst geöffnet und dann geschlossen. Nach einem Kompressionstakt mit anschliessender Verbrennung stehen im Brennraum 22 eines Zylinders 2 der Hubkolbenbrennkraftmaschine 1 heisse Verbrennungsgase unter einem Arbeitsdruck an, wodurch der Kolben 5 in einem Expansionstakt in bekannter Weise in Richtung einer unteren Totpunktposition UT, entsprechend einem Kurbelwinkel von 180°, bewegt wird. Wie üblich wird im Rahmen dieser Anmeldung bei einem Zweitaktverfahren die untere Totpunktposition UT des Kolbens 5, bei welcher der von Zylinder 2, Zylinderdeckel 21 und Kolben 5 begrenzte Brennraum 22 ein maximales Volumen aufweist, mit einem Kurbelwinkel von 180° identifiziert, während eine obere Totpunktposition OT, bei welcher der Brennraum 22 ein minimales Volumen aufweist, mit einem Kurbelwinkel von 0° bzw. 360° identifiziert wird. Bei einem Viertaktverfahren, wird, wie in bekannter Weise üblich, die untere Totpunktposition UT einem Kurbelwinkel von 180° bzw. 540° und die obere Totpunktposition OT einem Kurbelwinkel von 0°, 360° oder 720° zugeordnet. Das Auslassventil 3 ist unmittelbar nach dem Verbrennungsvorgang bei einem Kurbelwinkel K₁ zunächst noch geschlossen. In der sich an die Verbrennung anschliessende Vorspülphase V wird, bevor der Kolben 5 nach der Verbrennung die Spülschlitze 4 erstmals freigibt, bei einem vorgebbaren Kurbelwinkel K₂ das Auslassventil 3 geöffnet. Der Kurbelwinkel K₂ definiert den Beginn der Vorspülphase V. Dabei wird der Kurbelwinkel K₁ so gewählt, dass beim Öffnen des Auslassventils 3 zwischen Brennraum 22 und dem Abgasstutzen 13, der dazu geeignet ist, der Aufladegruppe 7 die Abgase 8 aus dem Brennraum 22 des Zylinders 2 zuzuführen, eine Druckdifferenz besteht, so dass aufgrund der Druckdifferenz ein Teil der heissen Abgase 8 durch den Abgasstutzen 13 in den Turbolader 14 gelangt und dort die Turbine 9 und damit das Laufrad 10 antreibt, wodurch komprimierte Luft als Spülluft 12 zum Einbringen in einen Brennraum 22 eines Zylinders 2, dessen Spülschlitze 4 zu diesem Zeitpunkt vom entsprechenden Kolben 5 freigegeben sind, zur Verfügung gestellt wird.

Wenn die Druckdifferenz zwischen Brennraum 22 und Abgasstutzen 13 im wesentlichen ausgeglichen ist, wird das Auslassventil 3 noch während der Vorspülphase V bei einem vorgebbaren Kurbelwinkel K₃ wieder geschlossen. Durch die weitere Bewegung des Kolbens 5 im Zylinder 2 in Richtung zur unteren Totpunktposition UT bei einem Kurbelwinkel K_{w} von 180° wird das eingeschlossene Volumen im Brennraum 22 vergrössert. Da das Auslassventil 3 geschlossen ist, fällt der Druck im Brennraum 22 unter den Wert eines Drucks im Einlassreceiver 19, über welchen Einlassreceiver 19 die Spülluft 12 in den Brennraum 22 des Zylinders 2 gelangt, wenn die Spülschlitze 4 vom Kolben 5 freigegeben sind, ab. Bei einem Kurbelwinkel K₄ gibt der Kolben 5 die Spülschlitze 4 zumindest teilweise frei, so dass Spülluft 12 aus dem Einlassreceiver 19 in den Brennraum 22 einströmen kann, wobei das Auslassventil 3 geschlossen bleibt. Durch den während der Vorspülphase V im Brennraum 22 bezüglich des Einlassreceivers 19 erzeugten Unterdruck wird die Spülluft 12 in den Brennraum 22 angesaugt. Das heisst, der Turbolader 14, der die Spülluft 12 über den Einlassreceiver 19 in den Brennraum 22 des Zylinders 2 unter einem vorgebbaren Druck einbringt, wird durch den im Brennraum 22 während der Expansionsbewegung des Kolbens 5 in der Vorspülphase V erzeugten Unterdruck in seiner Funktion unterstützt. Da die maximale Druckdifferenz zwischen Brennraum 22 und Einlassreceiver 19 von dem Kurbelwinkel K₃ abhängt, bei dem in der Vorspülphase V das Auslassventil 3 wieder geschlossen wird, kann die Menge an Frischluft, die während der Vorspülphase V nach der Freigabe der Spülschlitze 4 in den Brennraum 22 eingebracht wird, durch die Vorgabe des Kurbelwinkels K₃, bei welchem das Auslassventil 3 in der Vorspülphase V geschlossen wird, gesteuert und /oder geregelt werden.

In der Nähe der unteren Totpunktposition UT, entsprechend einem Kurbelwinkel K_{w} von 180°, wird das Auslassventil 3 bei einem Kurbelwinkel K₅, wieder geöffnet, so dass in einem folgenden Kompressionshub, der einen Kurbelwinkelbereich zwischen 180° und 360° umfasst, ein Teil der Abgase 8 durch das Auslassventil 3 über den Abgasstutzen 13 der Aufladegruppe 7 zugeführt wird. Das Auslassventil 3 bleibt bevorzugt zumindest solange geöffnet, bis der Kolben 5 die Spülschlitze 4 im Verlauf des Kompressionshubs wieder verschliesst und wird danach bei einem vorgebbaren Kurbelwinkel K₆ geschlossen. Das Schliessen des Auslassventils 3 beim Kurbelwinkel K₆ definiert dabei den Beginn der Hauptspülphase H. Bevorzugt wird das Auslassventils 3 durch eine nicht gezeigte frei programmierbare Ansteuereinheit in Abhängigkeit von der Drehzahl der Hubkolbenbrennkraftmaschine 1 und / oder dem Kurbelwinkel K_{w} und / oder dem Gasdruck im Brennraum 22 des Zylinders 2 und / oder der Temperatur im Brennraum 22 des Zylinders 2 und / oder der Drehzahl der Aufladegruppe 7 und / oder dem Gasdruck in der Aufladegruppe 7 und / oder der Temperatur in der Aufladegruppe 7 und / oder in Abhängigkeit anderer Betriebsparameter der Hubkolbenbrennkraftmaschine 1 gesteuert und / oder geregelt.

Dabei beträgt in einer bevorzugten Variante des erfindungsgemässen Verfahrens der Kurbelwinkel K₆ annähernd 270°. Es ist selbstverständlich möglich, dass das Auslassventil 3 bei einem anderen Wert des Kurbelwinkels K₆ geschlossen wird, die Hauptspülphase H also bei einem anderen Wert des Kurbelwinkels K₆ beginnt. So kann die Hauptspülphase H, wie in Fig. 3a gezeigt, insbesondere auch bei einem Kurbelwinkel K₆ von mehr als 360° einsetzen.

Zumindest innerhalb der Hauptspülphase H erfolgt keine Brennstoffeinspritzung. Durch die weitere Kompressionsbewegung des Kolbens 5 in Richtung der oberen Totpunktposition OT, entsprechend einem Kurbelwinkel K_{w} von 360°, wird das im Brennraum 22 eingeschlossene Gemisch aus Spülluft 12 und noch nicht ausgestossenen Abgasen 8 solange komprimiert, bis der Kolben 5 die obere Totpunktposition OT, entsprechend einem Kurbelwinkel K_{w} von 360° erreicht hat. Durch die anschliessende Expansionsbewegung des Kolbens 5 in Richtung der unteren Totpunktposition UT bei einem Kurbelwinkel von 540° fällt der Druck im Brennraum 22 des Zylinders 2 bei weiterhin geschlossenem Auslassventil 3 wieder ab. Das Auslassventil 3 ist somit vor einer erneuten Freigabe der Spülschlitze 4 bei einem Kurbelwinkel K₇, dessen Wert grösser als 360°ist, weiterhin geschlossen. Da der Weg des Kolbens 5 bei geschlossenem Auslassventil 3 nach dem Verschliessen der Spülschlitze 4 im Kompressionshub zwischen 180° und 360° kleiner ist, als der Weg des Kolbens 5 beim anschliessenden Expansionshub zwischen der oberen Totpunktposition OT bei einem Kurbelwinkel K_{w} von 360° und der erneuten Freigabe der Spülschlitze 4, entsteht im Brennraum 22 des Zylinders 2 bezüglich des Einlassreceivers 19 ein Unterdruck. Dabei hängt die maximale Grösse der Druckdifferenz zwischen Einlassreceiver 19 und Brennraum 22 davon ab, bei welchem Wert des Kurbelwinkels K₆ die Hauptspülphase H beginnt. Analog zur Vorspülphase V gibt der Kolben 5 bei einem Kurbelwinkel K₈ die Spülschlitze 4 zumindest teilweise wieder frei, so dass Spülluft 12 aus dem Einlassreceiver 19 in den Brennraum 22 einströmen kann, wobei das Auslassventil 3 geschlossen bleibt. Durch den während der Vorspülphase V im Brennraum 22 bezüglich des Einlassreceivers 19 erzeugten Unterdruck wird die Spülluft 12 in den Brennraum 22 angesaugt. Das heisst, der Turbolader 14, der die Spülluft 12 über den Einlassreceiver 19 in den Brennraum 22 des Zylinders 2 unter einem vorgebbaren Druck einbringt, wird durch den im Brennraum 22 während der Expansionsbewegung des Kolbens 5 in der Vorspülphase V erzeugten Unterdruck in seiner Funktion unterstützt. Da die maximale Druckdifferenz zwischen Brennraum 22 und Einlassreceiver 19 vom Kurbelwinkel K₆ des Startpunkts der Hauptspülphase H abhängt, kann die Menge an Spülluft 12, die während der Hauptspülphase H nach der Freigabe der Spülschlitze 4 in den Brennraum 22 eingebracht wird, durch die Vorgabe des Kurbelwinkels K₆ gesteuert und /oder geregelt werden.

In der Nähe der unteren Totpunktposition UT, entsprechend einem Kurbelwinkel K_{w} von 540° wird das Auslassventil 3 bei einem vorgebbaren Kurbelwinkel K₉ wieder geöffnet, so dass im folgenden Kompressionshub die verbleibenden Abgase 8 durch das Auslassventil 3 über den Abgasstutzen 13 der Aufladegruppe 7 zugeführt werden und es beginnt in bekannter Weise bei einem vorgebbaren Kurbelwinkel K₁₀, der das Ende der Hauptspülphase definiert, ein Kompressionstakt mit Kraftstoffeinspritzung und anschliessender Verbrennung.

Die Fig. 2b und 3b zeigen zwei weitere Varianten eines Viertaktverfahrens, wie sie im Rahmen des erfindungsgemässen Verfahrens bevorzugt Verwendung finden. Dabei unterscheiden sich die in den Fig. 2b und 3b dargestellten Varianten des Viertaktverfahrens im wesentlichen nur dadurch, dass die Hauptspülphase in Fig. 2b bei einem Kurbelwinkel von weniger als 360 und in Fig. 3a bei einem Kurbelwinkel, der grösser als 360° ist einsetzt. Daher werden diese beiden Varianten im folgenden gemeinsam diskutiert. An den Punkten, an denen sie sich unterscheiden, wird in der Beschreibung darauf hingewiesen.

Die in den Fig. 2b und 3b dargestellten Ausführungsformen eines Viertaktverfahrens unterscheiden sich von den zuvor in den Fig. 2a und 3a beschriebenen Varianten nur dadurch, dass in der Vorspülphase V das Auslassventil 3 nicht geschlossen wird. Nach erfolgter Kraftstoffeinspritzung mit nachfolgender Verbrennung und vor einem daran anschliessenden Eintritt der Spülluft 12 in den Brennraum 22 des Zylinders 2 wird das Auslassventil 3 in der Vorspülphase V bei einem Kurbelwinkel K₂ geöffnet. Auch hier definiert selbstverständlich der Kurbelwinkel K₂ den Beginn der Vorspülphase V. Das Auslassventil 3 ist unmittelbar nach dem Verbrennungsvorgang bei einem Kurbelwinkel K₁ zunächst noch geschlossen. In der sich an die Verbrennung anschliessenden Vorspülphase V wird, bevor der Kolben 5 nach der Verbrennung die Spülschlitze 4 erstmals freigibt, bei einem vorgebbaren Kurbelwinkel K₂ das Auslassventil 3 geöffnet. Dabei wird der Kurbelwinkel K₂ so gewählt, dass beim Öffnen des Auslassventils 3 zwischen Brennraum 22 und dem Abgasstutzen 13, der dazu geeignet ist, der Aufladegruppe 7 die Abgase 8 aus dem Brennraum 22 des Zylinder 2 zuzuführen, eine Druckdifferenz besteht, so dass aufgrund der Druckdifferenz ein Teil der heissen Abgase 8 durch den Abgasstutzen 13 in den Turbolader 14 gelangt und dort die Turbine 9 und damit das Laufrad 10 antreibt, wodurch komprimierte Luft als Spülluft 12 zum Einbringen in einen Brennraum 22 eines Zylinders 2, dessen Spülschlitze 4 zu diesem Zeitpunkt vom entsprechenden Kolben 5 freigegeben sind, zur Verfügung gestellt wird.

Die Druckdifferenz zwischen Brennraum 22 und Abgasstutzen 13 gleicht sich im wesentlichen aus. Das Auslassventil 3 wird (wie in den Fig. 2b und 3b dargestellt) nach erfolgtem Druckausgleich zwischen Brennraum 22 und Abgasstutzen 13 während der Vorspülphase V nicht wieder geschlossen, so dass durch die weitere Bewegung des Kolbens 5 im Zylinder 2 in Richtung zur unteren Totpunktposition UT bei einem Kurbelwinkel K_{w} von 180° der Druck im Brennraum 22 im wesentlichen nicht weiter abfällt. Dadurch kann die Menge an Frischluft, die nach Freigabe der Spülschlitze bei einem Kurbelwinkel K₄ aus dem Einlassreceiver 19 in den Brennraum 22 einströmen kann, im Vergleich zu den anhand der Fig. 2a und 3a diskutierten Varianten reduziert werden. Nach Freigabe der Spülschlitze 4 beim Kurbelwinkel K₄ bewegt sich der Kolben 5 weiter in Richtung der unteren Totpunktposition UT und es schliesst sich, wie bereits ausführlich bei Fig. 2a und 2b diskutiert, die Hauptspülphase H mit anschliessender Kraftstoffeinspritzung und Verbrennung an. Dabei beträgt in einer bevorzugten Variante des erfindungsgemässen Verfahrens der Kurbelwinkel K₆ ungefähr 270°. Auch hier ist es selbstverständlich möglich, dass das Auslassventil 3 bei einem anderen Wert des Kurbelwinkels K₆ geschlossen wird, die Hauptspülphase H also bei einem anderen Wert des Kurbelwinkels K₆ beginnt. So kann die Hauptspülphase H, wie in Fig. 3b gezeigt, insbesondere auch bei einem Kurbelwinkel K₆ von mehr als 360° einsetzen. Das heisst, das in Fig. 2b dargestellte Viertaktverfahren unterscheidet sich von dem in Fig. 3b dargestellten Viertaktverfahren im wesentlichen nur dadurch, dass die Hauptspülphase H in Fig. 2b bei einem Kurbelwinkel K_{w} beginnt der kleiner als 360° ist während der Kurbelwinkel K₆ in dem Verfahren gemäss Fig. 3b grösser oder gleich 360° ist.

In einer besonders bevorzugten Ausführungsform des erfindungsgemässen Verfahrens, wird die Hubkolbenbrennkraftmaschine 1 insbesondere oberhalb einer vorgebbaren ersten Grenzdrehzahl nach einem Zweitaktverfahren mit Verbrennungsphase, welche Verbrennungsphase eine Vorspülphase V umfasst, betrieben.

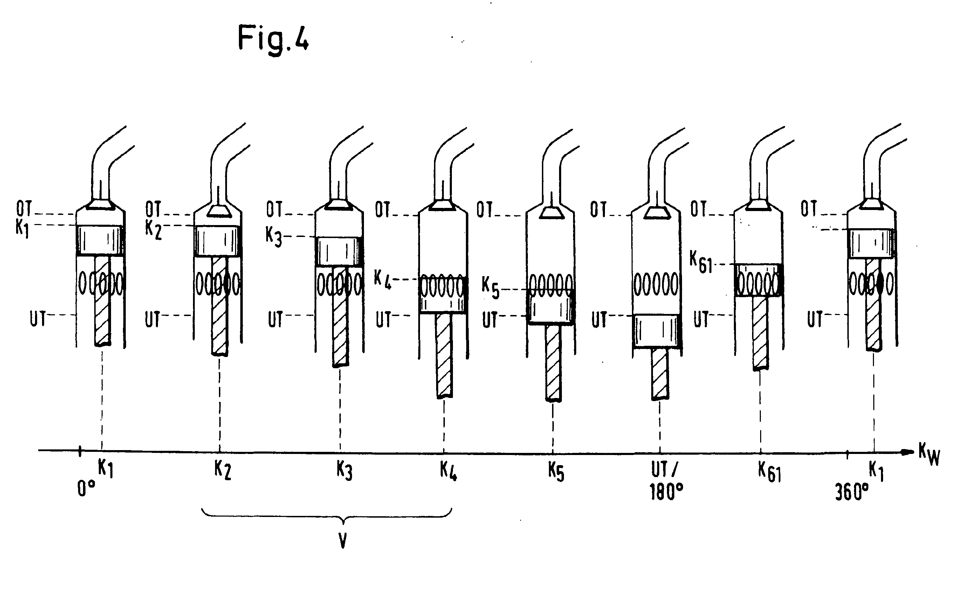

In Fig. 4 ist ein entsprechendes Zweitaktverfahren schematisch für einen Grossdieselmotor 1 dargestellt. Zur Erläuterung der wesentlichen Schritte ist in Fig. 4 ein vollständiger Zweitakt-Zyklus dargestellt. Gezeigt wird die Stellung des Zylinders 2 bei acht ausgewählten Kurbelwinkeln K_{W} innerhalb eines kompletten Zweitakt-Zyklus, wobei ein Kurbelwinkel K_{W} von 0° der oberen Totpunktposition OT und ein Kurbelwinkel K_{W} von 180° der unteren Totpunktposition UT des Kolbens 5 entspricht. Da es sich bei dem Verfahren um ein Zweitakt-Verfahren handelt, ist ein Kurbelwinkel K_{W} von 0° identisch mit einem Kurbelwinkel K_{W} von 360°.

Bei einem Kurbelwinkel K₁ ist im Brennraum 22 des Zylinders 2 nach einem vorangegangenen Kompressionstakt eine Verbrennung im wesentlichen abgeschlossen, so dass im Brennraum 22 heisse Verbrennungsgase unter einem Arbeitsdruck anstehen und dadurch der Kolben 5 im Zylinder 2 ausgehend vom Kurbelwinkel K₁ in einem Expansionstakt in Richtung der unteren Totpunktposition UT, entsprechend einem Kurbelwinkel K_{W} von 180°, bewegt wird. Das Auslassventil 3 ist beim Kurbelwinkel K₁ geschlossen. In der Vorspülphase V, die nach erfolgter Kraftstoffeinspritzung mit nachfolgender Verbrennung und vor einem daran anschliessenden Eintritt der Spülluft 12 in den Brennraum 22 Zylinder 2, also bevor der Kolben 5 nach einem Verbrennungstakt die Spülschlitze 4 erstmals freigibt, bei einem vorgebbaren Kurbelwinkel K₂ beginnt, wird beim Kurbelwinkel K₂ das Auslassventil 3 geöffnet. Dabei wird der Beginn der Vorspülphase V, also der Kurbelwinkel K₂ so gewählt, dass beim Öffnen des Auslassventils 3 beim Kurbelwinkel K₂ der Druck im Brennraum 22 des Zylinders 2 noch deutlich über dem Druck im Abgasstutzen 13 liegt. Aufgrund der Druckdifferenz zwischen Brennraum 22 und Abgasstutzen 13 strömen die heissen Abgase 8 durch den Abgasstutzen 13 in den Turbolader 14 und treiben dort die Turbine 9 und damit das Laufrad 10 an, so dass, wie oben beschrieben, komprimierte Luft als Spülluft 12 zum Einbringen in einen Brennraum 22 eines Zylinders 2 zur Verfügung steht, dessen Spülschlitze 4 zu diesem Zeitpunkt vom entsprechenden Kolben 5 freigegeben sind. Das heisst, durch das Öffnen des Auslassventils 3 wird in bekannter Weise ein Teil der thermischen Energie der Abgase 8 bereits vor Freigabe der Spülschlitze 4, also vor dem Einströmen der Spülluft 12 in den Brennraum 22 des Zylinders 2 zum Antrieb der Turbine 9 des Turboladers 14 ausgenutzt.

Bei einem Kurbelwinkel K₃, der etwas grösser als der Kurbelwinkel K₂ ist, hat sich die Druckdifferenz zwischen Brennraum 22 und Abgasstutzen 13 im wesentlichen ausgeglichen und das Auslassventil 3 wird beim Kurbelwinkel K₃ noch während der Vorspülphase V wieder geschlossen. Da die maximale Druckdifferenz zwischen Brennraum 22 und Einlassreceiver 19 von dem Kurbelwinkel K_{W} abhängt, bei dem in der Vorspülphase V das Auslassventil 3 wieder geschlossen wird, kann die Menge an Frischluft, die während der Vorspülphase V nach Freigabe der Spülschlitze 4 in den Brennraum 22 eingebracht wird, durch die Vorgabe des Kurbelwinkels K₃, bei welchem das Auslassventil 3 in der Vorspülphase V geschlossen wird, in Abhängigkeit von der Drehzahl der Hubkolbenbrennkraftmaschine 1, dem Kurbelwinkel K_{W} und /oder dem Gasdruck im Brennraum 22 des Zylinders 2 und / oder der Temperatur im Brennraum 22 des Zylinder 2 und / oder von der Drehzahl der Aufladegruppe 7 und / oder dem Gasdruck in der Aufladegruppe 7 und / oder der Temperatur in der Aufladegruppe 7 und / oder in Abhängigkeit anderer Betriebsparameter der Hubkolbenbrennkraftmaschine 1 gesteuert und / oder geregelt werden. Durch die weitere Bewegung des Kolbens 5 im Zylinder 2 in Richtung der unteren Totpunktposition UT wird das eingeschlossene Volumen im Brennraum 22 vergrössert, wodurch der Druck im Brennraum 22 unter den Druck im Einlassreceiver 19 abfällt, da das Auslassventil 3 geschlossen ist. Bei einem Kurbelwinkel K₄, der das Ende der Vorspülphase V markiert, gibt der Kolben 5 die Spülschlitze 4 zumindest teilweise frei, so dass Spülluft 12 aus dem Einlassreceiver 19 in den Brennraum 22 einströmen kann, wobei das Auslassventil 3 geschlossen bleibt. Durch den in der Vorspülphase V erzeugten Unterdruck im Brennraum 22 wird die Spülluft 12 in den Brennraum 22 angesaugt. Das heisst, der Turbolader 14, der die Spülluft 12 über den Einlassreceiver 19 in den Brennraum 22 des Zylinders 12 unter einem vorgebbaren Druck einbringt, wird durch den im Brennraum 22 während der Expansionsbewegung des Kolbens 5 in der Vorspülphase V erzeugten Unterdruck in seiner Funktion unterstützt.

In der Nähe der unteren Totpunktposition UT bei einem Kurbelwinkel K₅ und bevor der Kolben 5 die untere Totpunktposition UT erreicht, wird das Auslassventil 3 geöffnet, so dass im folgenden Kompressionstakt die Abgase 8 durch das Auslassventil 3 über den Abgasstutzen 13 der Aufladegruppe 7 zugeführt werden können. Bei einem Kurbelwinkel von 180° ist das Auslassventil 3 weiterhin geöffnet und es beginnt in bekannter Weise ein Kompressionstakt, wobei die Spülschlitze 4 beim Erreichen eines Kurbelwinkels K₆₁ geschlossen werden. Dabei wird das Auslassventil 3, je nach Anforderung, zu einem vorgebbaren Zeitpunkt vor oder nach Erreichen des Kurbelwinkels K₆₁ während des Kompressionstakts, d.h. nachdem der Kolben 5 die untere Totpunktposition UT passiert hat geschlossen.

In einer anderen Variante des erfindungsgemässen Verfahrens kann das Auslassventil 3 insbesondere auch nach Freigabe der Spülluftöffnung 4 wieder geschlossen werden, bevor der Kolben 5 die untere Totpunktposition UT erreicht hat. Durch die weitere Bewegung des Kolbens 5 in Richtung der oberen Totpunktposition OT wird die im Brennraum 22 eingeschlossene Luft komprimiert, zu einem vorgebbaren Zeitpunkt in an sich bekannter Weise Kraftstoff mittels einer nicht gezeigten Einspritzdüse in den Brennraum 22 eingebracht und es folgt die Verbrennung des Kraftstoff-Luftgemischs im Brennraum 22.

Die Betätigung des Auslassventils 3 kann dabei durch eine nicht gezeigte frei programmierbare Ansteuereinheit in Abhängigkeit von der Drehzahl der Hubkolbenbrennkraftmaschine 1, dem Kurbelwinkel K_{w} und / oder dem Gasdruck im Brennraum 22 des Zylinders 2 und / oder der Temperatur im Brennraum 22 des Zylinders 2 und / oder von der Drehzahl der Aufladegruppe 7 und / oder dem Gasdruck in der Aufladegruppe 7 und / oder der Temperatur in der Aufladegruppe 7 und / oder in Abhängigkeit anderer Betriebsparameter der Hubkolbenbrennkraftmaschine 1 gesteuert und / oder geregelt werden.

Durch Verwendung des erfindungsgemässen Verfahrens zum Betreiben einer längsgespülten Hubkolbenbrennkraftmaschine, insbesondere eines Grossdieselmotors, wird bevorzugt in einem Tieflastbereich, d.h. unterhalb einer vorgebbaren ersten Grenzdrehzahl der Maschine, eine Verbesserung der Zylinderspülung erreicht und die Menge an zugeführter Spülluft kann in Abhängigkeit von relevanten Betriebsparametern, insbesondere in Abhängigkeit von der Drehzahl der Hubkolbenbrennkraftmaschine bzw. der Drehzahl der Aufladegruppe, durch die Betätigung des Auslassventils gesteuert und / oder geregelt werden.

Darüber hinaus werden durch Verwendung eines erfindungsgemässen Verfahrens die Nachteile, die der Einsatz zusätzlicher Hilfslader zur Unterstützung des Abgasturboladers im Niederlastbetrieb mit sich bringt, vermieden. So wird nicht nur der Aufwand für die Anschaffung und die Installation der Hilfslader, sowie die zu ihrer Ansteuerung notwendigen Einrichtungen vermieden. Die Gestaltung des Einlassreceivers ist deutlich weniger aufwendig, da insbesondere auch auf die in Form von Klappen ausgeführten Rückströmsicherungen verzichtet werden kann. Auch der dafür notwendige Wartungs- und Reparaturaufwand mit den damit verbundenen Mehrkosten für Betriebsmittel, Ersatzteile und Personal entfällt. Insbesondere wird durch die Verwendung eines erfindungsgemässen Verfahren deutlich Platz und Gewicht eingespart. Darüber hinaus ist der Betrieb der Hubkolbenbrennkraftmaschine ohne Hilfslader auch aus energetischer Sicht günstiger, da die elektrische Energie für deren Betrieb nicht mehr zur Verfügung gestellt werden muss, was zusätzlich zu einer weiteren Einsparung von Kosten führt. Nicht zuletzt kann der Einsatz des erfindungsgemässen Verfahrens in einer Herabsetzung des Treibstoffverbrauchs der Hubkolbenbrennkraftmaschine resultieren.

## Patentansprüche

1. Verfahren zum Betreiben einer längsgespülten Hubkolbenbrennkraftmaschine (1), insbesondere eines Grossdieselmotors, umfassend:
- einen Zylinder (2) mit einem Auslassventil (3) und einer in Form von Spülschlitzen (4) ausgeführten Spülluftöffnung, in welchem Zylinder (2) ein Kolben (5) entlang einer Lauffläche (6) zwischen einer unteren Totpunktposition (UT) und einer oberen Totpunktposition (OT) hin- und herbewegbar angeordnet ist, sowie
- eine Aufladegruppe (7) mit einer von Abgasen (8) aus einem Brennraum (22) des Zylinders (2) angetriebenen Turbine (9) zum Verdichten von Luft (11), wobei die verdichtete Luft als Spülluft (12) dem Brennraum (22) des Zylinders (2) durch die Spülschlitze (4) zugeführt wird,
wobei mindestens ein Zylinder (2) der längsgespülten Hubkolbenbrennkraftmaschine (1) in einem Tieflastbereich unterhalb einer vorgebbaren ersten Grenzdrehzahl nach einem Viertaktverfahren betrieben wird, **dadurch gekennzeichnet dass** das Viertaktverfahren eine Verbrennungsphase mit Vorspülphase (V) umfasst, in welcher Vorspülphase ein Unterdruck im Zylinder (2) erzeugt wird.

2. Verfahren nach Anspruch 1, bei welchem mindestens ein Zylinder (2) der längsgespülten Hubkolbenbrennkraftmaschine (1) zumindest in einem zweiten Drehzahlbereich nach einem Zweitaktverfahren betrieben wird.

3. Verfahren nach einem der vorangehenden Ansprüche, bei welchem mindestens ein Zylinder (2) der längsgespülten Hubkolbenbrennkraftmaschine (1) in einem Niederlastbereich, welcher Niederlastbereich oberhalb der ersten Grenzdrehzahl und unterhalb einer vorgebbaren zweiten Grenzdrehzahl liegt, nach einem Viertaktverfahren betrieben wird.

4. Verfahren nach einem der vorangehenden Ansprüche, bei welchem mindestens ein Zylinder (2) der längsgespülten Hubkolbenbrennkraftmaschine (1) in einem Hochlastbereich oberhalb der zweiten Grenzdrehzahl nach einem Viertaktverfahren betrieben wird.

5. Verfahren nach einem der vorangehenden Ansprüche, wobei das Viertaktverfahren eine Hauptspülphase (H) umfasst.

6. Verfahren nach einem der vorangehenden Ansprüche, bei welchem das Zweitaktverfahren eine Verbrennungsphase mit Vorspülphase (V) umfasst.

7. Verfahren nach einem der vorangehenden Ansprüche, wobei das Auslassventil (3) mindestens eines Zylinders (2) in mindestens einem vorgebbaren Drehzahlbereich während der Vorspülphase (V) zuerst geöffnet und dann geschlossen wird.

8. Verfahren nach einem der vorangehenden Ansprüche, wobei das Auslassventil (3) mindestens eines Zylinders (2) in mindestens einem vorgebbaren Drehzahlbereich in der Hauptspülphase (H) zuerst geöffnet und dann geschlossen wird.

9. Verfahren nach einem der vorangehenden Ansprüche, wobei die Betätigung des Auslassventils (3) sowie der Zeitpunkt der Kraftstoffeinspritzung in den Brennraum (22) des Zylinders (2) koordiniert durch eine frei programmierbare Ansteuereinheit in Abhängigkeit von der Drehzahl der Hubkolbenbrennkraftmaschine (1) und / oder dem Kurbelwinkel (K_{W}) und / oder dem Gasdruck im Brennraum (22) des Zylinders (2) und / oder der Temperatur im Brennraum (22) des Zylinders (2) und / oder der Drehzahl der Aufladegruppe (7) und / oder dem Gasdruck in der Aufladegruppe (7) und / oder der Temperatur in der Aufladegruppe (7) und / oder in Abhängigkeit anderer Betriebsparameter der Hubkolbenbrennkraftmaschine (1) gesteuert und / oder geregelt wird.

10. Verfahren nach einem der vorangehenden Ansprüche, bei welchem das Auslassventil (3) in der Nähe der unteren Totpunktposition (UT) geöffnet und dann zu einem vorgebbaren Zeitpunkt vor oder nach Erreichen eines Kurbelwinkels (K₆) während eines Kompressionstakts wieder geschlossen wird.

## Claims

1. A method for the operation of a longitudinally scavenged reciprocating piston combustion engine (1), in particular of a large diesel engine, including:
- a cylinder (2) with an outlet valve (3) and a scavenging air opening designed in the form of scavenging slots (4), in which cylinder (2) a piston (5) is arranged movable to and fro along a running surface (6) between a bottom dead centre position (UT) and a top dead centre position (OT), and
- a supercharger group (7) with a turbine (9) driven by exhaust gases (8) from a combustion chamber (22) of the cylinder (2) for the compression of air (11), with the compressed air being supplied as scavenging air (12) to the combustion chamber (22) of the cylinder (2) through the scavenging slots (4),
wherein at least one cylinder (2) of the longitudinally scavenged reciprocating piston combustion engine (1) is operated in a low load range below a pre-settable first speed of rotation limit in accordance with a four stroke method,
**characterised in that** the four stroke method includes a combustion phase with a pre-scavenging phase (V), in which pre-scavenging phase an underpressure is generated in the cylinder (2).

2. A method in accordance with claim 1, in which at least one cylinder (2) of the longitudinally scavenged reciprocating piston combustion engine (1) is operated at least in a second speed of rotation range in accordance with a two stroke method.

3. A method in accordance with any one of the preceding claims, in which at least one cylinder (2) of the longitudinally scavenged reciprocating piston combustion engine (1) is operated in a low load range which lies above the first speed of rotation limit and below a pre-settable second speed of rotation limit in accordance with a four stroke method.

4. A method in accordance with any one of the preceding claims, in which at least one cylinder (2) of the longitudinally scavenged reciprocating piston combustion engine (1) is operated in a high load range above the second speed of rotation limit in accordance with a four stroke method.

5. A method in accordance with any one of the preceding claims, wherein the four stroke method includes a main scavenging phase (H).

6. A method in accordance with any one of the preceding claims, wherein the two stroke method includes a combustion phase with a pre-scavenging phase (V).

7. A method in accordance with any one of the preceding claims, wherein the outlet valve (3) of at least one cylinder (2) is first opened and then closed during the pre-scavenging phase (V) in at least one pre-settable speed of rotation range.

8. A method in accordance with any one of the preceding claims, wherein the outlet valve (3) of at least one cylinder (2) is first opened and then closed in the main scavenging phase (H) in at least one pre-settable speed of rotation range.

9. A method in accordance with any one of the preceding claims, wherein the actuation of the outlet valve (3) and the time of the fuel injection into the combustion chamber (22) of the cylinder (2) is controlled and/or regulated in a coordinated manner by a freely programmable control unit in dependence on the speed of rotation of the reciprocating piston combustion engine (1) and/or on the crank angle (Kw) and/or on the gas pressure in the combustion chamber (22) of the cylinder (2) and/or on the temperature in the combustion chamber (22) of the cylinder (2) and/or on the speed of rotation of the supercharger group (7) and/or on the gas pressure in the supercharger group (7) and/or on the temperature in the supercharger group (7) and/or in dependence on other operating parameters of the reciprocating piston combustion engine (1).

10. A method in accordance with any one of the preceding claims, wherein the outlet valve (3) is opened close to the bottom dead centre position (UT) and is then closed again at a pre-settable time before or after reaching a crank angle (K₆) during a compression cycle.

## Revendications

1. Procédé d'actionnement d'un moteur à combustion interne à pistons (1) à balayage longitudinal, en particulier d'un grand moteur Diesel, comprenant:
- un cylindre (2) avec une soupape d'échappement (3) et une ouverture d'air de balayage réalisée sous la forme de lumières de balayage (4), cylindre (2) dans lequel un piston (5) est disposé d'une manière déplaçable selon un mouvement alternatif le long d'une face de roulement (6) entre une position de point mort bas (UT) et une position de point mort haut (OT) et
- un groupe de charge (7) avec une turbine (9) entraînée par des gaz d'échappement (8) d'une enceinte de combustion (22) du cylindre (2) pour la condensation de l'air (11), où l'air condensé est amené comme air de balayage (12) à l'enceinte de combustion (22) du cylindre (2) à travers les lumières de balayage (4),
où au moins un cylindre (2) du moteur à combustion interne à pistons à balayage longitudinal (1) est amené à fonctionner dans une zone de charge basse en dessous d'un premier nombre de tours limite prédéfinissable selon un cycle de fonctionnement à quatre temps, **caractérisé en ce que** le cycle de fonctionnement à quatre temps comprend une phase de combustion avec une phase de pré-balayage (V), phase de pré-balayage dans laquelle est produite une dépression dans le cylindre (2).

2. Procédé selon la revendication 1, dans lequel au moins un cylindre (2) du moteur à combustion interne à pistons à balayage longitudinal (1) est amené à fonctionner au moins dans une deuxième plage de nombre de tours selon un cycle de fonctionnement à deux temps.

3. Procédé selon l'une des revendications précédentes, dans lequel au moins un cylindre (2) du moteur à combustion interne à pistons à balayage longitudinal (1) est amené à fonctionner dans une plage de charge faible, cette plage de charge faible se situant au-dessus du premier nombre de tours limite et en dessous d'un deuxième nombre de tours limite prédéfinissable, selon un cycle de fonctionnement à quatre temps.

4. Procédé selon l'une des revendications précédentes, dans lequel au moins un cylindre (2) du moteur à combustion interne à pistons à balayage longitudinal (1) est amené à fonctionner dans une plage de charge élevée au-dessus du deuxième nombre de tours limite selon un cycle de fonctionnement à quatre temps.

5. Procédé selon l'une des revendications précédentes, où le cycle de fonctionnement à quatre temps comprend une phase de balayage principale (H).

6. Procédé selon l'une des revendications précédentes, dans lequel le cycle de fonctionnement à deux temps comprend une phase de combustion avec phase de pré-balayage (V).

7. Procédé selon l'une des revendications précédentes, où la soupape de sortie (3) d'au moins un cylindre (2), dans au moins une zone de nombre de tours prédéfinissable, est d'abord ouverte pendant la phase de pré-balayage (V) et est ensuite fermée.

8. Procédé selon l'une des revendications précédentes, où la soupape d'échappement (3) d'au moins un cylindre (2), dans au moins une plage de nombre de tours prédéfinissable, est d'abord ouverte dans la phase de balayage principale (H) et est ensuite fermée.

9. Procédé selon l'une des revendications précédentes, où l'actionnement de la soupape d'échappement (3) ainsi que l'instant de l'injection du combustible dans l'enceinte de combustion (22) du cylindre (2) sont commandés et/ou réglés d'une manière coordonnée par une unité de commande librement programmable en fonction du nombre de tours du moteur à combustion interne à pistons (1) et/ou de l'angle de vilebrequin (K_{w}) et/ou de la pression de gaz dans l'enceinte de combustion (22) du cylindre (2) et/ou de la température dans l'enceinte de combustion (22) du cylindre (2) et/ou du nombre de tours du groupe de charge (7) et/ou de la pression de gaz dans le groupe de charge (7) et/ou de la température dans le groupe de charge (7) et/ou en fonction d'autres paramètres de fonctionnement du moteur à combustion interne à pistons (1).

10. Procédé selon l'une des revendications précédentes, dans lequel la soupape d'échappement (3) est ouverte à proximité de la position de point mort bas (UT) et est ensuite fermée de nouveau à un instant prédéfinissable avant ou après l'atteinte d'un angle de vilebrequin (K₆) pendant une course de compression.
